# FASCICULE DE BREVET EUROPEEN

(11) **EP 2 917 701 B1**
(45) Date de publication et mention de la délivrance du brevet: **07.08.2024**
(21) Numéro de dépôt: 13792760.4
(22) Date de dépôt: 05.11.2013
(51) Int. Cl.: G01F 15/06, H04Q 9/00, G01D 4/00, G01F 15/063

(54) **RÉSEAU INTELLIGENT DE COMMUNICATION DE DONNÉES PAR RADIO, NOTAMMENT POUR LA TÉLÉRELÈVE DE COMPTEURS DE FLUIDE**
INTELLIGENTES NETZWERK ZUR KOMMUNIKATION VON DATEN PER FUNK, INSBESONDERE FÜR DIE FERNABLESUNG VON DURCHFLUSSMESSERN
INTELLIGENT NETWORK FOR COMMUNICATING DATA BY RADIO, IN PARTICULAR FOR THE REMOTE READING OF FLUID METERS

(30) Priorité: 06.11.2012 FR 1260512
(43) Date de publication de la demande: 16.09.2015
(73) Titulaire: Suez International, 92040 Paris La Défense Cedex (FR)
(72) Inventeur: MILLE, Michael, F-28410 Bû (FR); CALVEZ, Philippe, F-78280 Guyancourt (FR); HERBRON, Jean-René, F-78420 Carrieres Sur Seine (FR); LACOSTE, Robert, F-92370 Chaville (FR)
(74) Mandataire: Lavoix
(86) Numéro de dépôt international: PCT/IB2013/059909
(87) Numéro de publication internationale: WO 2014/072902

(56) Documents cités:
- FR-A1- 2 896 067
- US-A1- 2011 140 909

## Description

L'invention est relative à un réseau intelligent de communication de données par radio, du genre de ceux qui comportent :
- un réseau de collecte constitué :
   - de capteurs et/ou de compteurs équipés de dispositifs radio communicants, en émission et en réception, à puissance d'émission réglable entre une valeur minimale et une valeur maximale,
   - de points d'accès, équipés de modules de communication radio en émission et en réception, assurant la collecte des données fournies par les dispositifs radio communicants,
- et un système d'information central constitué d'au moins un serveur, d'au moins une base de données, et d'au moins un poste d'exploitation, ce système étant programmé pour traiter et stocker l'ensemble des données recueillies, pour piloter tout ou partie du réseau de collecte, et pour commander la puissance d'émission de chaque dispositif radio communicant.

L'invention concerne plus particulièrement, mais non exclusivement, un tel réseau dans le cadre de la télérelève des compteurs de fluide, notamment compteurs d'eau et/ou de gaz.

US 2011/0140909 concerne un réseau de ce genre dans lequel un dispositif radio communicant est assigné à communiquer avec un point d'accès spécifique, ce qui complique les procédures de vérification et de sécurité d'échanges d'informations.

Les réseaux de télécommunication utilisés pour la transmission de données sont de deux types :
- des réseaux adossés à des infrastructures de communication filaire,
- des réseaux adossés à des infrastructures de communication radio.

L'invention concerne essentiellement les réseaux adossés à des infrastructures de communication radio, constituant des systèmes à diffusion, à la différence des systèmes connectés.

Les solutions mises en oeuvre actuellement sur les réseaux intelligents basés sur des communications radio font appel à des dispositifs radio communicants qui émettent à leur puissance maximale et utilisent l'ensemble du spectre radio électrique mis à la disposition de ces réseaux.

Il en résulte plusieurs inconvénients importants, particulièrement pour les bandes de fréquences dont les puissances d'émission sont supérieures à 50 mW, par exemple les bandes de fréquence définies par les Annexes 1G3 et 2B de la Recommandation européenne ERC 70-03. Parmi ces inconvénients, on peut citer :
- perturbations d'un point d'accès trop proche de dispositifs radio communicants ;
- augmentation du risque de collision entre des émissions de plusieurs dispositifs radio communicants, en raison du fait que de multiples dispositifs radio communicants peuvent se trouver sous la couverture d'un même point d'accès, et être vus par ce point ;
- un nombre potentiellement élevé de points d'accès recevant les données d'un même dispositif radio communicant ;
- une autonomie non optimisée de la source d'énergie électrique, en général une batterie, de chaque dispositif radio communicant.

L'invention a pour but, surtout, de proposer un réseau intelligent de communication de données qui ne présente plus, ou à un degré moindre, les inconvénients évoqués ci-dessus. Il est souhaitable, en particulier, que le réseau permette de maîtriser la communication et la demande énergétique.

Selon l'invention, un réseau intelligent de communication de données par radio, du genre défini précédemment, est caractérisé en ce que le système d'information central est programmé pour commander la puissance d'émission de chaque dispositif radio communicant de telle sorte que ce dispositif soit vu par un nombre de points d'accès compris entre une limite inférieure N1 et une limite supérieure N2.

Selon l'invention, le système d'information central est programmé :
- pour baisser la puissance d'émission du dispositif radio communicant si ce dernier est vu par un nombre de points d'accès supérieur à N2, sous réserve que la puissance minimale d'émission ne soit pas atteinte,
- et pour augmenter cette puissance d'émission si le dispositif radio communicant est vu par un nombre de points d'accès inférieur à N1, sous réserve que la puissance maximale d'émission ne soit pas atteinte.

Avantageusement, le nombre N1 est choisi égal à 2, tandis que le nombre N2 est choisi égal à 8, ce qui permet de disposer d'un réseau particulièrement fiable.

L'invention proposée repose sur deux grands axes :
- réglage de la puissance d'un dispositif radio communicant prenant en compte l'évolution de son environnement :
   - évolution du réseau intelligent, suite à l'ajout, ou au retrait de points d'accès, ou à une densification des dispositifs radio communicants,
   - évolution de l'environnement externe, par exemple en raison de la construction d'habitations ou d'ouvrages ayant un impact sur la propagation des ondes radio,
- automatisation de l'ajustement de la puissance d'émission.

Le système d'information central est avantageusement programmé pour que l'asservissement de la puissance d'émission d'un dispositif radio communicant soit effectué selon les étapes suivantes :
- collecte de données de supervision, par mesure des niveaux d'émission des dispositifs radio communicants, au niveau des récepteurs des points d'accès, supervision de la qualité de la liaison radio,
- analyse des données recueillies,
- sélection de la puissance d'émission à appliquer,
- émission d'une commande de réglage de la puissance d'émission par un poste d'exploitation qui transmet l'instruction aux dispositifs radio communicants.

Avantageusement, le réseau de collecte est constitué de compteurs de fluides, en particulier de compteurs d'eau ou de gaz, munis de dispositifs radio communicants, en émission et en réception, notamment pour transmettre des relevés de consommation à des instants déterminés.

Au moins un dispositif radio communicant peut être programmé pour augmenter de lui-même sa puissance d'émission lorsque son récepteur ne reçoit pas de message sur une période déterminée, en particulier d'un mois.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est un schéma synoptique simplifié d'un réseau intelligent de communication de données par radio, selon l'invention.
Fig. 2 est un schéma simplifié des étapes du programme du système d'information central pour l'ajustement de la puissance d'émission d'un dispositif radio communicant, et
Fig. 3 est un schéma simplifié illustrant l'asservissement de la puissance d'émission dans un réseau de communication selon l'invention.

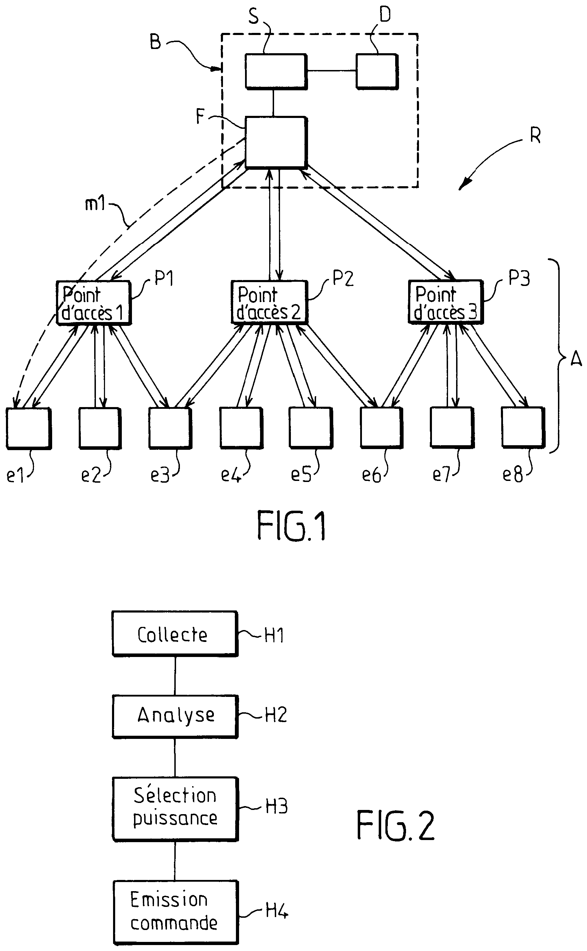

En se reportant à Fig. 1 des dessins, on peut voir un réseau intelligent R de communication de données par radio qui comporte un réseau de collecte A et un système d'information central B.

Le réseau de collecte A comprend des équipements terminaux e1... en, dont le nombre peut être de plusieurs milliers. Sur le dessin, n'ont été représentés que huit équipements terminaux e1-e8.

Ces équipement terminaux sont constitués soit par des compteurs de fluide, en particulier des compteurs d'eau ou de gaz pour des consommateurs particuliers ou des collectivités, soit par des capteurs dans les domaines de l'industrie, par exemple des capteurs de débit, de pression, de température, d'humidité, de niveau, de vitesse, ou des capteurs acoustiques, des capteurs de conductivité, de turbidité, de mesure du pH ou de taux de H₂S. Il peut s'agir également de capteurs dans l'habitat et les activités tertiaires, tels que des capteurs de détection d'intrusion, ou de fumée, ou d'oxyde de carbone CO.

Les équipements terminaux sont équipés d'un module de communication radio en émission et en réception et sont désignés par l'expression "dispositifs radio communicants". Dans le cas de compteurs de fluide, notamment de compteurs d'eau, il s'agit de compteurs équipés de systèmes de télérelève permettant de lire et de transmettre à distance au moins les index de communication de fluide donnés par le compteur.

La puissance d'émission de chaque dispositif radio communicant est réglable entre une valeur minimale et une valeur maximale. La commande de réglage peut être effectuée par instruction envoyée par radio avec un code propre à chaque dispositif radio communicant.

L'invention s'applique à toutes les bandes de fréquences utilisées par les réseaux intelligents, et notamment les bandes de fréquences ISM (Industriel, Scientifique, Médical) et la bande de fréquences définie par l'Annexe 2B de la Recommandation européenne ERC 70-03. En fonction de la largeur de bandes, la bande peut être subdivisée en n canaux ; chaque dispositif radio communicant émet sur un canal.

Le réseau de collecte comprend également des points d'accès P1, P2, P3... généralement en nombre inférieur à celui des équipements terminaux. Ces points d'accès assurent la collecte des données fournies par les dispositifs radio communicants e1.... e8. Les points d'accès P1-P3 sont équipés de modules de communication radio en émission et en réception. Les récepteurs des points d'accès sont en écoute permanente.

Chaque dispositif radio communicant e1,...e8 envoie un message de durée limitée, par exemple de 200 millisecondes, Les dispositifs radio communicants n'envoient un message qu'un nombre limité de fois par jour, par exemple deux fois par jour. à intervalles de 12 h. Chaque message contient au moins l'index de consommation de fluide, et l'identification du compteur.

Un même point d'accès P1-P3 peut voir plusieurs dispositifs radio communicants, c'est-à-dire recevoir les émissions de ces différents dispositifs radio communicants. Notamment, un point d'accès peut voir jusqu'à plusieurs milliers de dispositifs radio communicants de compteurs d'eau, par exemple de l'ordre de 20 000.

Dans l'exemple de Fig. 1, le point d'accès P1 « voit » les dispositifs radio communicants e1, e2, e3, tandis que le point d'accès P2 voit les dispositifs communicants e3, e4, e5, e6.

Le système d'information central B est constitué d'au moins un poste d'exploitation F, d'un serveur S, et d'une base de données D. Le système B peut communiquer par liaison radio ou liaison filaire avec les différents points d'accès P1-P3, par messages codés, et peut envoyer des instructions par radio également par messages codés, à chacun des dispositifs radio communicants e1-e8, via un point d'accès. Le système d'information central B peut ainsi traiter et stocker l'ensemble des données recueillies par les points d'accès, en provenance des dispositifs radio communicants, et piloter tout ou partie du réseau de collecte par messages envoyés aux points d'accès et/ou aux dispositifs radio communicants.

Dans un tel réseau intelligent, un point d'accès trop proche de dispositifs radio communicants peut connaître des perturbations. Les risques de collision dus à de multiples dispositifs radio communicants, sous couverture d'un même point d'accès, sont accrus. Le nombre de points d'accès recevant les données d'un même dispositif radio communicant peut être relativement élevé. En outre, les dispositifs radio communicants étant alimentés par batterie, il est important de réduire leur consommation.

Selon l'invention, la puissance d'émission d'un dispositif radio communicant e1-e8 est asservie de telle sorte que chaque dispositif radio communicant e1-e8 soit vu par un nombre de points d'accès P1-P3 compris entre une limite inférieure N1 et une limite supérieure N2. Avantageusement, N1 est égal à 2, de sorte que l'on maintient le lien entre un dispositif radio communicant et au moins deux points d'accès. N2 peut être égal à 8.

Le système d'information central B programmé selon l'invention procède aux opérations suivantes :
- réglage de la puissance d'un dispositif radio communicant en prenant en compte l'évolution de son environnement :
   - évolution du réseau intelligent, par suite de l'ajout/retrait de points d'accès, de la densification des dispositifs radio communicants e1-e8 ;
   - évolution de l'environnement externe : notamment construction d'habitations ou d'ouvrages ayant un impact sur la propagation des ondes radio,
   - automatisation de l'ajustement de la puissance d'émission du dispositif radio communicant par envoi d'un message m1 schématisé par un trait en tirets sur Fig. 1 entre le poste d'exploitation et le dispositif radio communicant concerné, e1 selon l'exemple considéré. Le message m1 est un message codé, selon un code spécifique au dispositif radio communicant concerné qui seul est affecté par ce message.

Le message m1 (commande de réglage de la puissance) est envoyé au dispositif communicant e1 via le point d'accès p1. Toutefois, ce message n'est pas interprétable par le point d'accès p1. Le point d'accès se contente de transporter le message. Ceci est schématisé sur le dessin par un trait en tirets provenant du poste d'exploitation F et traversant sans interruption le point d'accès P1, pour aboutir sur le dispositif communicant e1.

L'asservissement de la puissance d'émission, assuré par le système d'information central programmé selon l'invention, est avantageusement mis en oeuvre selon les étapes suivantes schématisées sur Fig. 2 :
1/ une étape H1 de collecte de données de supervision reçues par le système d'information central B en provenance des points d'accès P1-P3. Ces données de supervision concernent les différents dispositifs radio communicants e1-e8 et comportent une mesure des niveaux d'émission de chaque dispositif radio communicant e1-e8, effectuée au niveau des récepteurs des points d'accès P1-P3.
2/ l'étape suivante H2 consiste en une analyse des données disponibles : évaluation, par les points d'accès, du niveau de réception des émissions de chaque dispositif radio communicant : niveau de réception trop haut ou trop faible ; détermination du nombre de points d'accès en visibilité de l'émetteur de chaque dispositif radio communicant : nombre trop important ou trop faible ; détermination du taux d'erreurs de trames ou du taux d'erreurs de bits.
3/ la troisième étape H3 consiste dans la sélection de la puissance d'émission à appliquer à un dispositif radio communicant, en programmant les opérations suivantes :
   - baisse de la puissance d'émission si le dispositif radio communicant est vu par un nombre de points d'accès trop élevé, c'est-à-dire supérieur à la limite N2, cette baisse n'étant envisagée que si la puissance minimale d'émission n'est pas déjà atteinte ;
   - augmentation de la puissance d'émission si le dispositif radio communicant est vu par un nombre insuffisant de points d'accès, c'est-à-dire un nombre inférieur à la limite N1 ; toutefois, cette augmentation ne sera commandée que si la puissance maximale d'émission n'est pas déjà atteinte.
4/ la quatrième étape consiste en l'émission d'une commande de réglage de la puissance d'émission du dispositif radio communicant, e1 dans l'exemple considéré, par le poste d'exploitation F qui envoie l'ordre de réglage sous forme du message codé m1 directement reçu par le récepteur du dispositif radio communicant e1.

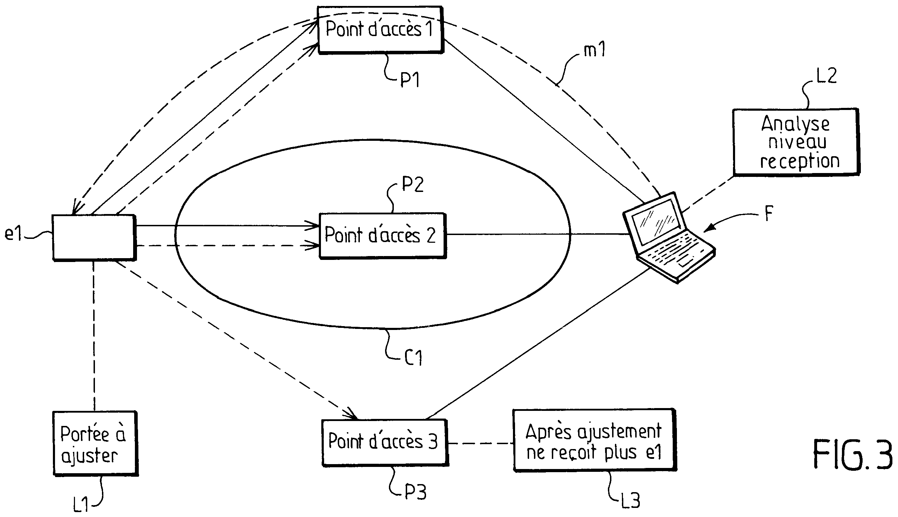

Fig. 3 est un schéma illustrant l'asservissement selon l'invention, avec des étiquettes résumant les situations et les interventions.

Avant réception de la commande de réglage, le dispositif radio communicant e1 selon l'étiquette L1 est vu par l'ensemble des points d'accès P1, P2, P3, comme schématisé par les flèches en tirets sur Fig.3. Pour optimiser l'utilisation du spectre, il est souhaitable de réduire le nombre de points d'accès voyant le dispositif e1 et d'en ajuster (réduire dans le cas présent) la puissance d'émission et donc la portée, comme schématisé selon l'étiquette L1.

Le poste d'exploitation F, selon l'étiquette L2, analyse le niveau de réception du signal émis par le dispositif radio e1 au niveau de chaque point d'accès P1-P3, ainsi que la qualité du signal reçu. En fonction de ces données et du nombre de points d'accès recevant le signal, le poste d'exploitation F ajuste la puissance d'émission du dispositif radio e1 en lui envoyant une commande m1 d'ajustement de la puissance.

Après ajustement, le signal représenté par un trait continu provenant du dispositif radio e1 n'est reçu que par les deux points d'accès P1 et P2. L'étiquette L3 signale qu'après ajustement le point d'accès P3 ne reçoit plus le signal émis par le dispositif radio communicant e1.

La boucle d'asservissement de la puissance d'émission est schématisée par le contour C1.

Les augmentations ou baisses de la puissance d'un dispositif radio communicant sont effectuées par paliers jusqu'à obtenir que le dispositif radio communicant soit vu par un nombre de points d'accès compris entre les limites indiquées, la puissance d'émission restant comprise entre les limites mini et maxi.

On prévoit avantageusement qu'un dispositif radio communicant dont le récepteur ne reçoit pas de message sur une période déterminée, par exemple d'un mois, augmente de lui-même sa puissance d'émission.

Le temps d'écoute au niveau de chaque dispositif radio communicant est limité dans le temps et est généralement choisi sur un intervalle de temps qui suit une émission d'information par ce dispositif radio communicant. Ceci permet d'éviter, ou de réduire, les risques de brouillage dus à des informations provenant de deux ou plusieurs points d'accès.

Les principaux avantages apportés par l'invention consistent en :
- une optimisation du spectre radio électrique disponible,
- une réponse adaptée à la problématique des zones denses comportant de nombreux dispositifs radio communicants sur une faible surface,
- une adaptation automatique du réseau intelligent en fonction de l'avancement de son déploiement.

Une application particulièrement intéressante de l'invention concerne les réseaux intelligents de télérelève de compteurs d'eau et/ou de gaz.

De nombreuses autres applications industrielles sont possibles telles que :
- systèmes de télérelève de compteurs d'électricité,
- systèmes de surveillance de capteurs dans les domaines de l'industrie : par exemple capteurs de débit, de pression, de température, d'humidité, de niveau, de vitesse, ou capteurs acoustiques, capteurs de conductivité, de turbidité, de mesure du pH, de taux de H₂S ;
- systèmes de surveillance de capteurs dans l'habitat et les activités tertiaires : capteurs de détection d'intrusion, de fumée, d'oxyde de carbone CO.

## Revendications

1. . Réseau intelligent de communication de données par radio comportant :
- un réseau de collecte (A) constitué :
- de capteurs et/ou de compteurs équipés de dispositifs radio communicants (e1 ...e8), en émission et en réception, à puissance d'émission réglable entre une valeur minimale et une valeur maximale,
- de points d'accès, équipés de modules de communication radio en émission et en réception, assurant la collecte des données fournies par les dispositifs radio communicants,
- et un système d'information central (B) constitué d'au moins un serveur (S), d'au moins une base de données (D), et d'au moins un poste d'exploitation (F), ce système étant programmé pour traiter et stocker l'ensemble des données recueillies, pour piloter tout ou partie du réseau de collecte, et pour commander la puissance d'émission de chaque dispositif radio communicant (e1 ...e8), **caractérisé en ce que** le système d'information central (B) est programmé pour commander la puissance d'émission de chaque dispositif radio communicant (e1 ...e8) de telle sorte que ce dispositif soit vu par un nombre de points d'accès compris entre une limite inférieure N1 et une limite supérieure N2 et **en ce que** le système d'information central (B) est programmé :
- pour baisser la puissance d'émission du dispositif radio communicant si ce dernier est vu par un nombre de points d'accès supérieur à N2, sous réserve que la puissance minimale d'émission ne soit pas atteinte,
- et pour augmenter cette puissance d'émission si le dispositif radio communicant est vu par un nombre de points d'accès inférieur à N1, sous réserve que la puissance maximale d'émission ne soit pas atteinte.

2. . Réseau selon la revendication 1, **caractérisé en ce que** le nombre N1 est choisi égal à 2.

3. . Réseau selon la revendication 1 ou 2, **caractérisé en ce que** le nombre N2 est choisi égal à 8.

4. . Réseau selon l'une quelconque des revendications précédentes, caractérisé en ce q u e le système d'information central (B) est programmé pour que l'asservissement de la puissance d'émission d'un dispositif radio communicant (e1,..e8) soit effectué selon les étapes suivantes :
- collecte de données de supervision, par mesure des niveaux d'émission des dispositifs radio communicants, au niveau des récepteurs des points d'accès,
- analyse des données recueillies,
- sélection de la puissance d'émission à appliquer,
- émission d'une commande (m_1) de réglage de la puissance d'émission par un poste d'exploitation (F) qui transmet l'instruction aux dispositifs radio communicants.

5. . Réseau selon l'une quelconque des revendications précédentes, **caractérisé en ce que** le réseau de collecte (A) est constitué de compteurs de fluide, en particulier de compteurs d'eau ou de gaz, munis de dispositifs radio communicants, en émission et en réception, notamment pour transmettre des relevés de consommation à des instants déterminés.

6. . Réseau selon l'une quelconque des revendications précédentes, **caractérisé en ce qu'**au moins un dispositif radio communicant est programmé pour augmenter de lui-même sa puissance d'émission lorsque son récepteur ne reçoit pas de message sur une période déterminée, en particulier d'un mois.

## Patentansprüche

1. Intelligentes Funkdatenkommunikationsnetz mit:
- einem Sammelnetz (A), bestehend aus:
- Sensoren und/oder Zählern, die mit Funkkommunikationsvorrichtungen (e1 ...e8) ausgestattet sind, die senden und empfangen können und deren Sendeleistung zwischen einem Minimalwert und einem Maximalwert einstellbar ist,
- Zugangspunkte, die mit sendenden und empfangenden Funkkommunikationsmodulen ausgestattet sind und die Sammlung der von den Funkkommunikationsvorrichtungen gelieferten Daten sicherstellen,
- und ein zentrales Informationssystem (B), das aus mindestens einem Server (S), mindestens einer Datenbank (D) und mindestens einer Betriebsstation (F) besteht, wobei dieses System so programmiert ist, dass es zur Verarbeitung und Speicherung aller gesammelten Daten, zur Steuerung des gesamten oder eines Teils des Sammelnetzes und zur Steuerung der Sendeleistung jedes kommunizierenden Funkgeräts (e1 ...e8) dient, **dadurch gekennzeichnet, dass** das zentrale Informationssystem (B) programmiert ist, um die Sendeleistung jeder Funkkommunikationsvorrichtung (e1 ...e8) so zu steuern, dass diese Vorrichtung von einer Anzahl von Zugangspunkten gesehen wird, die zwischen einer unteren Grenze N1 und einer oberen Grenze N2 liegt, und dass das zentrale Informationssystem (B) programmiert ist:
- um die Sendeleistung der Funkkommunikationsvorrichtung zu senken, wenn diese von einer Anzahl von Zugangspunkten gesehen wird, die größer als N2 ist, vorausgesetzt, die minimale Sendeleistung wird nicht erreicht,
- und um diese Sendeleistung zu erhöhen, wenn die Funkkommunikationsvorrichtung von einer Anzahl von Zugangspunkten gesehen wird, die kleiner als N1 ist, vorausgesetzt, dass die maximale Sendeleistung nicht erreicht wird.

2. Netzwerk nach Anspruch 1, **dadurch gekennzeichnet, dass** die Zahl N1 gleich 2 gewählt wird.

3. Netzwerk nach Anspruch 1 oder 2, **dadurch gekennzeichnet, dass** die Zahl N2 gleich 8 gewählt wird.

4. Netzwerk nach einem der vorhergehenden Ansprüche, **dadurch gekennzeichnet, dass** das zentrale Informationssystem (B) so programmiert ist, dass die Nachregelung der Sendeleistung einer Funkkommunikationsvorrichtung (e1,...e8) gemäß den folgenden Schritten durchgeführt wird:
- Sammlung von Überwachungsdaten durch Messung der Emissionswerte von Funkkommunikationsvorrichtungen an den Empfängern der Zugangspunkte,
- Analyse der gesammelten Daten,
- Auswahl der anzuwendenden Sendeleistung,
- Senden eines Befehls (m_1) zur Einstellung der Sendeleistung durch eine Betriebsstation (F), die die Anweisung an die Funkkommunikationsvorrichtungen weiterleitet.

5. Netz nach einem der vorhergehenden Ansprüche, **dadurch gekennzeichnet, dass** das Sammelnetz (A) aus Flüssigkeitszählern besteht, insbesondere aus Wasser- und Gaszählern, die mit Funkkommunikationsvorrichtungen zum Senden und Empfangen ausgestattet sind, insbesondere zum Übertragen von Verbrauchsdaten zu bestimmten Zeitpunkten.

6. Netzwerk nach einem der vorhergehenden Ansprüche, **dadurch gekennzeichnet, dass** mindestens ein kommunizierendes Funkgerät so programmiert ist, dass es seine Sendeleistung von sich aus erhöht, wenn sein Empfänger über einen bestimmten Zeitraum, insbesondere einen Monat, keine Nachricht empfängt.

## Claims

1. An intelligent network for communicating data by radio comprising:
- a collection network (A) consisting:
- of sensors and/or meters equipped with communicating radio devices (e1...e8) for transmitting and receiving, with transmission power adjustable between a minimum value and a maximum value,
- of access points, equipped with transmitting and receiving radio communication modules, ensuring the collection of the data supplied by the communicating radio devices,
- and a central information system (B) consisting of at least one server (S), at least one database (D), and at least one operating station (F), this system being programmed to process and store all the data collected, to drive all or part of the collection network, and to control the transmission power of each communicating radio device (e1...e8),
**characterized in that** the central information system (B) is programmed to control the transmission power of each communicating radio device (e1...e8) such that this device is seen by a number of access points lying between a lower limit N1 and an upper limit N2 and **in that** the central information system (B) is programmed:
- to lower the transmission power of the communicating radio device if the latter is seen by a number of access points greater than N2, provided that the minimum transmission power is not reached,
- and to increase this transmission power if the communicating radio device is seen by a number of access points less than N1, provided that the maximum transmission power is not reached.

2. The network as claimed in claim 1, **characterized in that** the number N1 is chosen to be equal to 2.

3. The network as claimed in claim 1 or 2, **characterized in that** the number N2 is chosen to be equal to 8.

4. The network as claimed in any one of the preceding claims, **characterized in that** the central information system (B) is programmed so that the transmission power of a communicating radio device (e1,...e8) is controlled according to the following steps:
- collection of supervision data, by measurement of the transmission levels of the communicating radio devices, on receivers of the access points,
- analysis of the data collected,
- selection of the transmission power to be applied,
- transmission of a command (m1) to adjust the transmission power by an operating station (F) which transmits the instruction to the communicating radio devices.

5. The network as claimed in any one of the preceding claims, **characterized in that** the collection network (A) is made up of fluid meters, in particular of water or gas meters, provided with communicating radio devices for transmitting and receiving, notably for transmitting consumption readings at determined instants.

6. The network as claimed in any one of the preceding claims, **characterized in that** at least one communicating radio device is programmed to increase its transmission power by itself when its receiver does not receive any message over a determined period, in particular one month.
